# EUROPEAN PATENT SPECIFICATION

(11) **EP 2 937 280 B1**
(45) Date of publication and mention of the grant of the patent: **06.02.2019**
(21) Application number: 15164809.4
(22) Date of filing: 23.04.2015
(51) Int. Cl.: B64C 3/56

(54) **SYSTEM FOR LATCHING AND LOCKING A FOLDABLE AIRFOIL**
SYSTEM ZUR VERRIEGELUNG UND ZUM BLOCKIEREN EINER FALTBAREN TRAGFLÄCHE
SYSTÈME DE VERROUILLAGE ET DE BLOCAGE D'UNE AILE PLIABLE

(30) Priority: 25.04.2014 US 201414262608
(43) Date of publication of application: 28.10.2015
(73) Proprietor: The Boeing Company, Chicago, IL 60606-1596 (US)
(72) Inventor: Lassen, Matthew A., Chicago, IL 60606-2016 (US); Ostrom, Nicholas A., Chicago, IL 60606-2016 (US); Weaver, Jared D., Chicago, IL 60606-2016 (US); Whitt, Daniel R., Chicago, IL 60606-2016 (US)
(74) Representative: Smith, Jeremy Robert

(56) References cited:
- GB-A- 773 739
- US-A- 2 418 301
- US-A- 5 558 299
- US-A1- 2011 180 657
- US-A1- 2013 099 060

## Description

### BACKGROUND

Long span wings are desirable for commercial aircraft as they are more aerodynamically efficient than shorter wings. Greater aerodynamic efficiency reduces fuel consumption, which reduces operating costs.

Existing airport designs place limits on aircraft wingspan. Airport designs are based on International Civil Aviation Organization (ICAO) Codes A through F, which establish dimensional limits on wingspan, landing gear width, length, etc. For instance, an ICAO Code E airport limits wingspan to less than 65 meters.

A folding wing design may be used to reduce the span of these wings to fit within the limitations of an existing airport's infrastructure (e.g., runways, taxiways, and gate areas). Folding wings may be folded to fit within parking areas and taxiways, and they may be deployed prior to takeoff to increase wing span.

A folding wing design may include a foldable outboard section that is hinged to a fixed inboard section for movement between a stowed position and a deployed position. After being moved to the deployed position, the foldable section is fixed to the fixed section. Wing fold joints may use hinges and latch pins.

In commercial aircraft, high reaction loads may be overcome by increasing the size of the hinges and latch pins. However, these size increases are undesirable because they increase aircraft weight. The increase in weight negates the advantages offered by the long span wings.

US 5 558 299 A discloses a wing fold assembly for use in aircraft which provides relative rotational movement of a first wing tip about a second fixed wing including a plurality of wing tip flanges, and a plurality of fixed wing flanges wherein all of said flanges are rotatably mounted to a central shaft. Selectively interlocking said wing tip flanges in relation to said fixed wing flanges thereby locks said wing tip in position relative to said fixed wing in either of a folded or faired position.

GB 773 739 A discloses a foldable aircraft wing with mechanism for operating and locking the outboard section thereof. A single actuator in each wing is designed in such a manner as to accomplish the locking and unlocking of the sections, with this same mechanism serving the additional function of raising and lowering the outboard section relative to the inboard.

### SUMMARY

In an aspect, a foldable airfoil for an aircraft is provided, the airfoil including: inboard and outboard sections that are hinged together about a hinge line; and a first latching mechanism on an inboard side of the hinge line and a second latching mechanism on an outboard side of the hinge line for latching the outboard section to the inboard section when the outboard section is in a deployed position; wherein the inboard and outboard sections are hinged together by a hinge assembly including a torque box and the first and second latching mechanisms; and wherein each of the first and second latching mechanisms includes one or more retractable latch pin actuators.

### BRIEF DESCRIPTION OF THE DRAWINGS

FIG. 1 is an illustration of an aircraft.
FIG. 2 is an illustration of a foldable wing for an aircraft.
FIG. 3 is an illustration of a foldable wing including multiple torque boxes.
FIG. 4 is an illustration of a double-ended latch pin actuator.
FIG. 5 is an illustration of a foldable wing including a single torque box and multiple latch pin actuators for the torque box.
FIG. 6 is an illustration of a foldable wing including a single torque box and multiple latch pin actuators for the torque box.
FIG. 7 is an illustration of a method of enhancing performance of a commercial aircraft that includes wing assemblies with folding wing tips.

### DETAILED DESCRIPTION

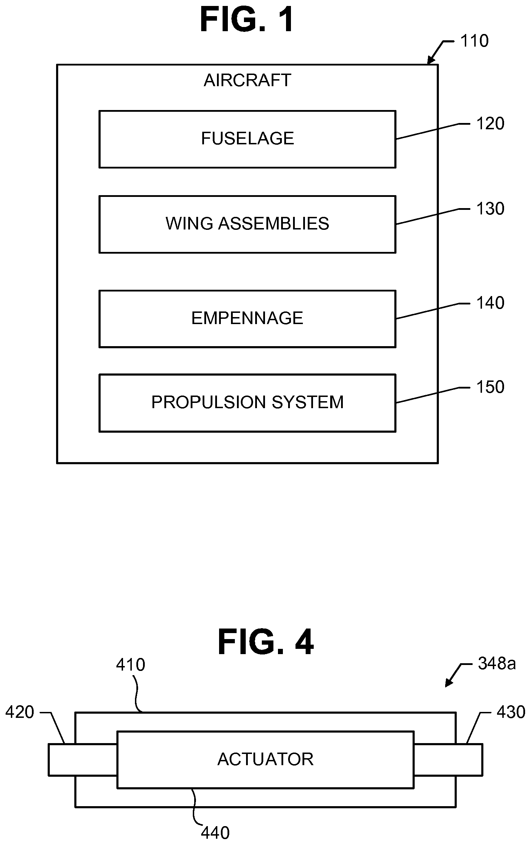

Reference is made to Figure 1, which illustrates an aircraft 110 including a fuselage 120, wing assemblies 130, and empennage 140. One or more propulsion units 150 are coupled to the fuselage 120, wing assemblies 130 or other portions of the aircraft 110. At least one of the wing assemblies 130 and the empennage 140 includes a foldable airfoil. The foldable airfoil includes a fixed section and a foldable section that is hinged to the fixed section. As a first example of a foldable airfoil, each wing assembly 130 includes a foldable wing. The foldable wings of the wing assemblies 130 may be stowed to fit the aircraft 110 within runways, taxiways and gate areas. Stowing the foldable wings may enable the aircraft 110 to comply with airport codes, such as ICAO and/or FAA codes. The foldable wings may be deployed prior to takeoff to lengthen the wingspan. The lengthened wingspan enables higher aerodynamic efficiency without incurring penalties from increased weight or drag.

As a second example of a foldable airfoil, the empennage 140 includes a foldable vertical stabilizer. The foldable vertical stabilizer may be stowed to fit within a hangar.

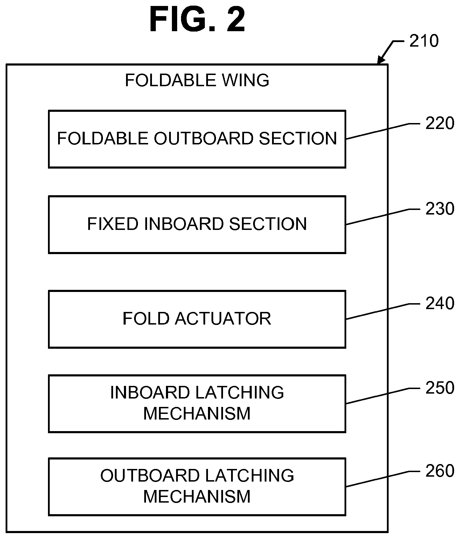

Reference is made to Figure 2, which illustrates a foldable wing 210 including a foldable outboard section 220 and a fixed inboard section 230. The foldable outboard section 220 is hinged to the fixed inboard section 230 about a hinge line. A fold actuator 240 causes the foldable outboard section 220 to fold about the hinge line between a stowed position and a deployed position.

The fixed inboard section 230, which may be a main wing or an inboard section thereof, includes moveable flight control surfaces (e.g., ailerons, slats, flaps). The foldable outboard section 220 may or may not include moveable flight control surfaces. In some embodiments, the foldable outboard section 220 may be a wing tip. In other embodiments, the foldable outboard section 220 may include an outboard section of the main wing.

An inboard latching mechanism 250 is located on an inboard side of the hinge line. An outboard latching mechanism 260 is located on an outboard side of the hinge line. The latching mechanisms 250 and 260 latch the foldable outboard section 220 to the fixed inboard section 230 when the outboard section 220 is in a deployed position. Each latching mechanism 250 and 260 may include one or more latch pin actuators.

Placing the latching mechanisms 250 and 260 on opposite sides of the hinge line can create an ideal load path with no joints to maneuver. It saves weight in the structure that transfers flight loads to the fixed inboard section 230. It also results in a better load sharing for latching mechanisms 250 and 260 that are equi-distant from the hinge line (the latching mechanisms 250 and 260 will experience the same amount of load).

In some embodiments, the foldable outboard section 220 may be hinged to the fixed inboard section 230 via one or more torque boxes. In general, a torque box is a closed structure that can carry both bending and torsional loads. A torque box may have a box-like structure, but is not so limited. For instance, a torque box may have the shape of a torque tube. Torque boxes are described in greater detail in assignee's U.S. Serial No. 13/664,371 filed 30 October 2012, which is incorporated herein by reference.

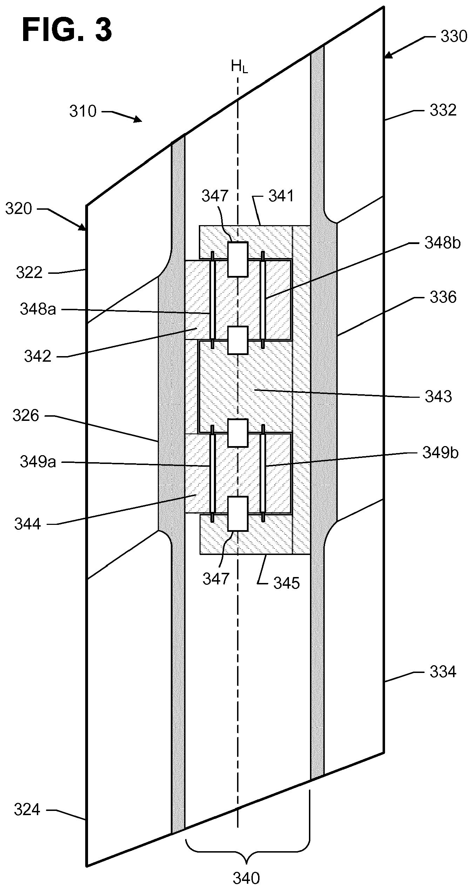

Reference is made to Figure 3, which illustrates a foldable wing 310 including a foldable section 320 that is hinged to a fixed section 330 via a hinge assembly 340. The foldable section 320 includes front and rear spars 322 and 324 extending in a spanwise direction, and a closeout rib 326 extending in a chordwise direction. The fixed section 330 includes front and rear spars 332 and 334 extending in a spanwise direction, and a closeout rib 336 extending in a chordwise direction.

The hinge assembly 340 includes a plurality of interleaved torque boxes 341-345 that are hinged together. First, third, and fifth torque boxes 341, 343 and 345 extend in a spanwise direction from the closeout rib 336 of the fixed section 330. Second and fourth torque boxes 342 and 344 extend in a spanwise direction from the closeout rib 326 of the foldable section 320.

The second torque box 342 is hinged between the first and third torque boxes 341 and 343 by hinge pins 347. The fourth torque box 344 is hinged between the third and fifth torque boxes 343 and 345 by hinge pins 347. A hinge line H_{L} extends through the hinge pins 347 in a chordwise direction through a central location of the foldable section 320. Although a chordwise hinge line H_{L} is shown in FIG. 3, a skewed hinge axis may be used in some embodiments.

The foldable section 320 is folded about the hinge axis H_{L} by rotating the second and fourth torque boxes 342 and 344 about the hinge axis H_{L}. The foldable section 320 may be folded upward or downward into a stowed position. The foldable section 320 may be folded to a deployed position that is in-plane with the fixed section 330.

The hinge line H_{L} may be aligned with the closeout ribs 326 and 336, and perpendicular or skewed to the front spar 332 of the fixed section 330. This chordwise design may keep drive systems and actuators in the same plane for easier power transfer and more compact construction. It reduces or eliminates the need for offset gearboxes, universal joints and torque tubes, thus reducing weight and increasing reliability of the hinge assembly 340.

Rotary actuators (not shown) may be used to rotate the second and fourth torque boxes 342 and 344 about the hinge axis H_{L}. The hinge pins 347 reduce the motion to rotation only. A rotary actuator may include, without limitation, a conventional planetary gearbox, or a rotary vane hydraulic actuator, or a hydraulic actuator that has a linear piston pushing against a helical screw.

The hinge assembly 340 further includes an outboard latch mechanism including first and second double-ended retractable latch pin actuators 348a and 349a on an outboard side of the hinge line H_{L}. The hinge assembly 340 further includes an inboard locking mechanism including third and fourth double-ended retractable latch pin actuators 348b and 349b on the inboard side of the hinge line H_{L}.

The latch pin actuators 348a and 348b are located inside the second torque box 342, and extend in a chordwise direction between the sides of the second torque box 342. Similarly, the latch pin actuators 349a and 349b are located inside the fourth torque box 344, and extend in a chordwise direction between the sides of the second torque box 344.

Reference is made to FIG. 4, which illustrates a double-ended latch pin actuator 348a (the other latch pin actuators 348b, 349a and 349b may have the same construction). The latch pin actuator 348a may include a housing 410, latch pins 420 and 430 at opposite ends of the housing 410, and an actuator 440 for moving the latch pins 420 and 430 between a fully retracted position and a fully extended position. The latch pins 420 and 430 are moved to the fully extended position to latch the deployed foldable section 320 to the fixed section 330. The latch pins 420 and 430 are fully retracted to enable the foldable section 320 to be moved between the deployed and stowed positions. Motive power (hydraulics, electricity, pneumatics) for the actuator 440 may be routed through the hinge pins 347.

The latch pin actuator 348a may further include a mechanism (not shown) for locking the latch pins 420 and 430 in the extended position. For example, the mechanism may include a mechanical lock for creating physical interference behind the latch pins 420 and 430 when the latch pins 420 and 430 have been moved to the extended position.

Returning to FIG. 3, the latch pin actuators 348a and 348b may extend from sidewall to sidewall of the second torque box 342. Similarly, the latch pin actuators 349a and 349b may extend from sidewall to sidewall of the fourth torque box 344. When the latch pins are fully extended, they engage adjacent torque boxes. For example, the latch pins of the actuators 348a and 348b extend through openings in spanwise sidewalls of the first and third torque boxes 341 and 343. Similarly, the latch pins of the actuators 349a and 349b extend through openings in spanwise sidewalls of the third and fifth torque boxes 343 and 345.

The latch pin actuators 348a, 348b, 349a and 349b may be oriented parallel to the hinge line H_{L}. As a result of their parallel orientation, the latch pins don't take their loads all along a single axis and all lock through a single straight piece of structure, creating an ideal load path with no joints to maneuver, which saves weight in the structure that transfers the loads to the fixed section 330.

The inboard and outboard latch pin actuators 348a and 348b may be equi-distant from the hinge line H_{L}. The inboard and outboard latch pin actuators 349a and 349b may be equi-distant from the hinge line H_{L}. This equi-distant arrangement enables all latch pin actuators to have the same size, which facilitates easier load sharing between pins, and part commonality (fewer spares are needed).

A hinge assembly herein is not limited to the arrangement illustrated in FIG. 3. As a first example, the latch pin actuators 348a and 349a may be located in the second and fourth torque boxes 342 and 344, and a single latch pin actuator 348b may be located in the third torque box 343. As a second example, latch pin actuators 348a and 348b are located only in the third torque box 343.

A hinge assembly herein is not limited to latch actuators with double-ended latch pins. Two separate latch pin actuators may be used instead of a double-ended pin actuator.

A hinge assembly herein is not limited to inboard and outboard latch pin actuators that are equi-distant from the hinge line HL. A non-equidistant arrangement provides freedom to have latch pin actuators of different sizes. For example, if the inboard latch pin actuators are closer to the hinge line H_{L}, they would be smaller and the outboard latch pin actuators would be larger.

Regardless, placing the redundant latch pin actuators on the inboard and outboard sides of the hinge line can result in a more compact hinge assembly, which can be used on smaller airplanes. On a smaller wing, spatial constraints may limit the use of additional torque boxes. On some wings, there may sufficient space for only a single torque box.

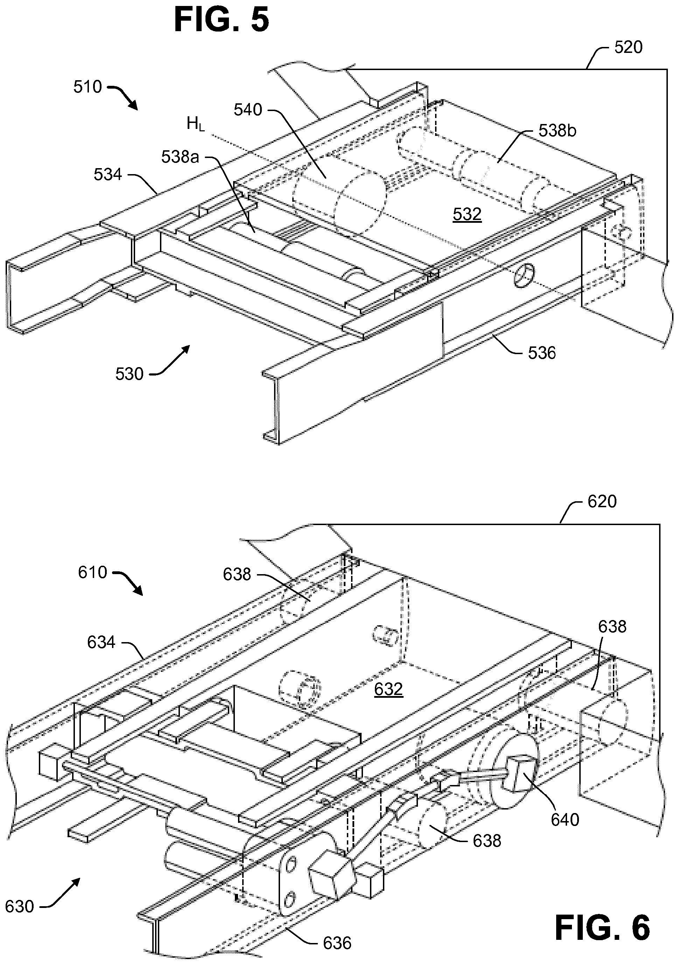

Reference is made to Figure 5, which illustrates a foldable wing 510 including a foldable section 520 that is hinged to a fixed section (not shown) by a hinge assembly 530. The hinge assembly 530 includes a single torque box 532 extending spanwise from the foldable section 520. The hinge assembly 530 further includes first and second spanwise shear wall structures 534 and 536 on opposite sides of the torque box 532. The torque box 532 is hinged to the shear wall structures 534 and 536 about a hinge line H_{L}. Each shear wall structure 534 and 536 may include one or more shear walls.

A rotary actuator 540 causes the torque box 532 to rotate about the hinge line H_{L}. The rotary actuator 540 is located inside the torque box 532.

Inboard and outboard double-ended latch pin actuators 538a and 538b are also located inside the torque box 532, on opposite sides of the hinge line H_{L}. Each latch pin actuator 538a and 538b extends chordwise. When fully extended, latch pins of the actuators 538a and 538b extend through openings in the shear wall structures 534 and 536. A double shear wall provides a better structural load path than a single shear wall. The additional shear wall creates redundancy of lugs and clevises for the latch pins to go through.

Reference is made to Figure 6, which illustrates a foldable wing 610 including a foldable section 620 that is hinged to a fixed section (not shown) by a hinge assembly 630. The hinge assembly 630 includes a single torque box 632 extending spanwise from the foldable section 620. The hinge assembly 630 further includes first and second spanwise shear wall structures 634 and 636 on opposite sides of the torque box 632. The torque box 632 is hinged to the shear wall structures 634 and 636 about a hinge line H_{L}.

A rotary actuator 640 causes the torque box 632 to rotate about the hinge line H_{L}. The rotary actuator 640 is located outside the torque box 632.

The hinge assembly 630 further includes four single-ended latch pin actuators 638. The latch pin actuators 638 are attached to the shear wall structures 634 and 636, outside the torque box 632. Each latch pin actuator 638 may be located at a corner of the torque box 632. Latch pins of the actuators 638 extend into the torque box 632 to latch the foldable section 620 to the fixed section.

The hinge assemblies 530 and 630 of Figures 5 and 6 enable four latch pins to be used in a single torque box 532 and 632. If one latch pin fails, the three other latch pins, as well as the hinge pins, can share and sustain the resulting increased load. Additionally, as the pins surround the hinge, they take the flight loads at all four extremes of the torque box.

In the wings 510 and 610 of Figures 5 and 6, the shear wall structures are not limited to shear walls. The latch pins may latch onto other structures such as cargo doors and fuel pods.

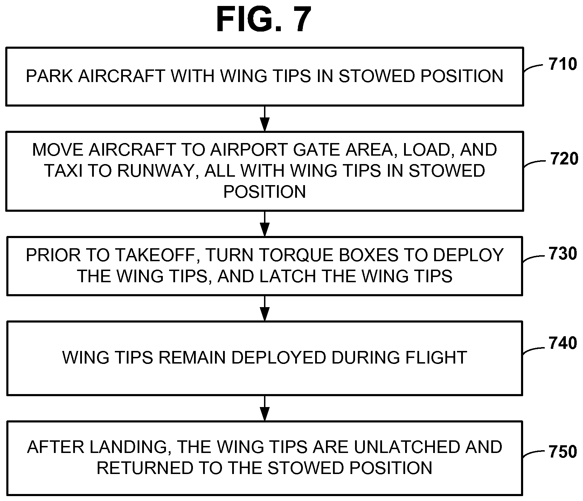

Reference is now made to FIG. 7, which illustrates a method of enhancing performance of a commercial aircraft that includes wings with folding wing tips. The folding wing tips are hinged to inboard sections of the main wings.

At block 710, the aircraft is parked with its wing tips in a stowed position. At block 720, the aircraft is moved to a gate, loaded, and taxied to a runway. The wing tips remain in the stowed position so the aircraft can fit within taxiways en route to the runway.

At block 730, prior to takeoff, the outboard portions of the wing tips are deployed by rotating the torque boxes extending from the wing tips. The latch pins are then extended to latch the wing tips to the main wings. By deploying the folding wing tips, wingspan is extended. The extended wingspan increases lift during takeoff

At block 740, the wing tips remain latched during flight. Latch pin actuators on opposite sides of the hinge line share flight loads. The use of four latch pins provides redundancy. During flight, the extended wingspan increases aerodynamic efficiency, which reduces fuel consumption.

At block 750, the aircraft lands. The wing tips are unlatched, and rotated back to their stowed position.

## Claims

1. A foldable airfoil for an aircraft, the airfoil including:
inboard (330) and outboard (320) sections that are hinged together about a hinge line (H_{L}); and
a first latching mechanism (250) on an inboard side of the hinge line and a second latching mechanism (260) on an outboard side of the hinge line for latching the outboard section to the inboard section when the outboard section is in a deployed position; wherein the inboard and outboard sections are hinged together by a hinge assembly (340) including a torque box (342, 344, 532, 632) and the first and second latching mechanisms; and wherein each of the first and second latching mechanisms includes one or more retractable latch pin actuators (348a, 348b, 349a, 349b, 538a, 583b, 638).

2. The airfoil of claim 1, wherein the airfoil is a foldable wing (210) of a wing assembly (130).

3. The airfoil of claim 1 or 2, wherein the torque box extends in a spanwise direction from a closeout rib (326, 336) of one of the inboard and outboard sections.

4. The airfoil of claim 3, wherein the hinge line is aligned with the closeout rib, and perpendicular to a front spar (322, 332) of the inboard section.

5. The airfoil of any preceding claim, wherein the torque box includes first and second spanwise walls (534, 536), and wherein the hinge assembly further includes fixed structures opposing the spanwise walls, and wherein latch pins (420, 430) of the latch pin actuators (538a, 538b) are extended through openings in the fixed structures to latch the outboard section to the inboard section.

6. The airfoil of any preceding claim, wherein the latch pin actuators are oriented parallel to the hinge line.

7. The airfoil of any preceding claim, wherein the latch pin actuators are equi-distant from the hinge line.

8. The airfoil of any preceding claim, wherein each latch pin actuator includes a housing (410) extending between spanwise walls of the torque box, and first and second latch pins at opposite ends of the housing, each latch pin movable between an extended position and a retracted position.

9. The airfoil of any preceding claim, wherein the torque box is a second torque box (342); wherein the hinge assembly further includes first (341) and third (343) torque boxes interleaved with, and hinged to, the second torque box; and wherein the first and second latch pin actuators are located inside the second torque box, on opposite sides of the hinge line.

10. The airfoil of any of claims 1 to 8, wherein the torque box (532) is the only torque box in the hinge assembly (530); and wherein the hinge assembly further includes a spanwise shear wall structure on opposite sides of the torque box, the torque box hinged to the shear walls about the hinge line.

11. The airfoil of claim 10, wherein the latch pin actuators are located inside the torque box, on opposite sides of the hinge line.

12. The airfoil of claim 10, wherein the latch pin actuators are attached to the shear wall structures outside the torque box; and wherein latch pins of the actuators are extendable into the torque box.

13. The airfoil of any of claims 1 to 11, wherein the latch pin actuators (538a, 538b) are double-ended and are located within the torque box.

## Patentansprüche

1. Faltbare Tragfläche für ein Flugzeug, wobei die Tragfläche aufweist:
innere (330) und äußere (320) Abschnitte, die um eine Scharnierlinie (H_{L}) herum miteinander verbunden sind; und
einen ersten Rastmechanismus (250) an einer Innenseite der Scharnierlinie und einen zweiten Rastmechanismus (260) an einer Außenseite der Scharnierlinie zum Verrasten des äußeren Abschnitts mit dem inneren Abschnitt, wenn sich der äußere Abschnitt in einer ausgezogenen Position befindet; wobei der innere und der äußere Abschnitt durch eine Scharnieranordnung (304), die einen Drehmomentkasten (342, 344, 532, 632) und die ersten und zweiten Rastmechanismen aufweist, miteinander verbunden sind; und wobei jeder des ersten und des zweiten Rastmechanismus einen oder mehrere zurückziehbare Raststiftaktoren (348a, 348b, 349a, 349b, 538a, 583b, 638) aufweist.

2. Tragfläche nach Anspruch 1, wobei die Tragfläche ein faltbarer Flügel (210) einer Flügelanordnung (130) ist.

3. Tragfläche nach Anspruch 1 oder 2, wobei sich der Drehmomentkasten in Spannweitenrichtung von einer Endrippe (326, 336) eines des inneren und des äußeren Abschnitts erstreckt.

4. Tragfläche nach Anspruch 3, wobei die Scharnierlinie mit der Endrippe ausgerichtet und senkrecht zu einem vorderen Holm (322, 332) des inneren Abschnitts ist.

5. Tragfläche nach einem der vorhergehenden Ansprüche, wobei der Drehmomentkasten erste und zweite spannweitige Wände (534, 536) aufweist, und wobei die Scharnieranordnung des Weiteren feste Strukturen aufweist, die den spannweitigen Wänden gegenüberliegen, und wobei sich Raststifte (420, 430) der Raststiftaktoren (538a, 538b) durch Öffnungen in den festen Strukturen erstrecken, um den äußeren Abschnitt mit dem inneren Abschnitt zu verrasten.

6. Tragfläche nach einem der vorhergehenden Ansprüche, wobei die Raststiftaktoren parallel zu der Scharnierlinie ausgerichtet sind.

7. Tragfläche nach einem der vorhergehenden Ansprüche, wobei die Raststiftaktoren in gleichem Abstand von der Scharnierlinie angeordnet sind.

8. Tragfläche nach einem der vorhergehenden Ansprüche, wobei jeder Raststiftaktor ein Gehäuse (410) aufweist, das sich zwischen spannweitigen Wänden des Drehmomentkastens erstreckt, und erste und zweite Raststifte an gegenüberliegenden Enden des Gehäuses, wobei jeder Raststift zwischen einer ausgezogenen Position und einer zurückgezogenen Position bewegt werden kann.

9. Tragfläche nach einem der vorhergehenden Ansprüche, wobei der Drehmomentkasten ein zweiter Drehmomentkasten (342) ist, wobei die Scharnieranordnung des Weiteren erste (341) und dritte (343) Drehmomentkästen aufweist, die mit dem zweiten Drehmomentkasten verschachtelt und damit verbunden sind; und wobei die ersten und zweiten Raststiftaktoren in dem zweiten Drehmomentkasten angeordnet sind, an gegenüberliegenden Seiten der Scharnierlinie.

10. Tragfläche nach einem der Ansprüchen 1 bis 8, wobei der Drehmomentkasten (532) der einzige Drehmomentkasten in der Scharnieranordnung (530) ist; und wobei die Scharnieranordnung des Weiteren eine spannweitige Scherwandstruktur an gegenüberliegenden Seiten des Drehmomentkastens aufweist, wobei der Drehmomentkasten um die Scharnierlinie herum mit den Scherwänden verbunden ist.

11. Tragfläche nach Anspruch 10, wobei die Raststiftaktoren in dem Drehmomentkasten an gegenüberliegenden Seiten der Scharnierlinie angeordnet sind.

12. Tragfläche nach Anspruch 10, wobei die Raststiftaktoren außerhalb des Drehmomentkastens an den Scherwandstrukturen befestigt sind; und wobei Raststifte der Aktoren in den Drehmomentkasten erstreckbar sind.

13. Tragfläche nach einem der Ansprüche 1 bis 11, wobei die Raststiftaktoren (538a, 538b) doppelendig sind und in dem Drehmomentkasten angeordnet sind.

## Revendications

1. Profil pliant pour un avion, le profil incluant :
des sections interne (330) et externe (320) qui sont articulées ensemble autour d'une ligne charnière (H_{L}) ; et
un premier mécanisme de verrouillage (250) sur un côté interne de la ligne charnière et un second mécanisme de verrouillage (260) sur un côté externe de la ligne charnière pour fixer la section externe contre la section interne quand la section externe est en position déployée ; les sections internes et externes étant articulées ensemble par un montage de charnière (340) incluant un caisson de torsion (342, 344, 532, 632) et les premier et second mécanismes de verrouillage ; et chacun des premier et second mécanismes de verrouillage incluent au moins un actionneur rétractable à goupille de verrouillage (348a, 348b, 349a, 349b, 538a, 583b, 638) .

2. Profil selon la revendication 1, le profil étant une aile pliante (210) d'un montage d'aile (130).

3. Profil selon la revendication 1 ou 2, dans lequel le caisson de torsion s'étend sur l'envergure de l'aile depuis une nervure de fermeture (326, 336) d'une des sections interne et externe.

4. Profil selon la revendication 3, dans lequel la ligne charnière est alignée avec la nervure de fermeture et perpendiculaire à un longeron avant (322, 332) de la section interne.

5. Profil selon l'une quelconque des revendications précédentes, dans lequel le caisson de torsion comporte des première et secondes parois sur l'envergure (534, 536) et dans lequel le montage de charnière inclut, en outre, des structures fixes opposées aux parois sur l'envergure, et dans lequel les goupilles de verrouillage (420, 430) des actionneurs à goupilles de verrouillage (538a, 538b) s'étendent à travers des ouvertures dans les structures fixes pour fixer la section externe à la section interne.

6. Profil selon l'une quelconque des revendications précédentes, dans lequel les actionneurs à goupilles de verrouillage sont orientés parallèlement à la ligne charnière.

7. Profil selon l'une quelconque des revendications précédentes, dans lequel les actionneurs à goupilles de verrouillage sont équidistants de la ligne charnière.

8. Profil selon l'une quelconque des revendications précédentes, dans lequel chaque actionneur à goupilles de verrouillage inclut un carter (410) s'étendant entre les parois le long de l'envergure du caisson de torsion, et des premières et secondes goupilles de verrouillage aux extrémités opposées du carter, chaque goupille de verrouillage étant mobile entre une position étendue et une position rétractée.

9. Profil selon l'une quelconque des revendications précédentes, dans lequel le caisson de torsion est un deuxième caisson de torsion (342) ; le montage de charnière incluant en outre des premier (341) et troisième (343) caissons de torsion intercalés et articulés au deuxième caisson de torsion ; et les premier et second actionneurs à goupilles de verrouillage étant situés à l'intérieur du deuxième caisson de torsion, sur les côtés opposés de la ligne charnière.

10. Profil selon l'une quelconque des revendications 1 à 8, dans lequel le caisson de torsion (532) est le seul caisson de torsion dans le montage de charnière (530) ; et dans lequel le montage de charnière comporte, en outre, une structure de paroi de cisaillement le long de l'envergure sur les côtés opposés du caisson de torsion, le caisson de torsion étant articulé sur les parois de cisaillement autour de la ligne charnière.

11. Profil selon la revendication 10, dans lequel les actionneurs à goupilles de verrouillage sont situés à l'intérieur du caisson de torsion, sur les côtés opposés de la ligne charnière.

12. Profil selon la revendication 10, dans lequel les actionneurs à goupilles de verrouillage sont attachés aux structures de paroi de cisaillement hors du caisson de torsion ; et dans lequel les goupilles de verrouillage des actionneurs peuvent s'étendre dans le caisson de torsion.

13. Profil selon l'une quelconque des revendications 1 à 11, dans lequel les actionneurs à goupilles de verrouillage (538a, 538b) comportent deux extrémités et sont situés à l'intérieur du caisson de torsion.
